# EUROPÄISCHE PATENTSCHRIFT

(11) **EP 0 867 641 B1**
(45) Veröffentlichungstag und Bekanntmachung des Hinweises auf die Patenterteilung: **04.10.2001**
(21) Anmeldenummer: 98105611.2
(22) Anmeldetag: 27.03.1998
(51) Int. Cl.: F16H 57/02

(54) **Mehrteiliges Getriebegehäuse**
Multi-piece gear housing
Carter de boîte de vitesses à plusieurs parts

(30) Priorität: 27.03.1997 DE 19712989
(43) Veröffentlichungstag der Anmeldung: 30.09.1998
(73) Patentinhaber: Danfoss A/S, 6430 Nordborg (DK)
(72) Erfinder:
(74) Vertreter: Knoblauch, Andreas, Dr.-Ing.

(56) Entgegenhaltungen:
- DD-A- 88 436
- DE-A- 3 743 715
- US-A- 2 327 777

## Beschreibung

Die Erfindung betrifft ein Getriegegehäuse gemäß dem Oberbegriff von Anspruch 1, wie es aus der DD-A-88 436 bekannt ist.

Getriebegehäuse und insbesondere Getriebegehäuse von Getriebemotoren sind verhältnismäßig dünnwandige Gebilde. Diese Dünnwandigkeit führt zu Problemen bei der Herstellung, weil es nicht genügt, das Getriebegehäuse in einem Urformverfahren herzustellen.

In der Regel muss das gegossene oder gespritzte Gehäuse anschließend spangebend bearbeitet werden. Dazu muss der Rohling in der Werkzeugmaschine gespannt werden. Bereits beim Aufspannen des dünnwandigen Rohlings kann ein Verzug hervorgerufen werden, der zu entsprechenden Gestaltsfehlern führt, wenn die Aufspannkräfte wegfallen, sobald das fertig bearbeitete Gehäuse aus der Werkzeugmaschine entnommen wird.

Auch die Bearbeitungskräfte selbst können zu einer Verformung beitragen.

Schließlich besteht ein wesentliches Problem bei Getriebegehäusen darin, dass nicht alle spangebenden Bearbeitungsvorgänge von einer Seite her ausgeführt werden können. Zumindest einige der Bearbeitungsvorgänge müssen auch von der gegenüberliegenden Seite vorgenommen werden. Z.B. bei Getriebegehäusen für Getriebemotoren sitzt der Elektromotor an einer Seitenwand des Gehäuses, während die Ausgangswelle an einer anderen Seitenwand aus dem Getriebegehäuse vorsteht. Selbst dann, wenn die Gehäusewand, an der der Motor angeflanscht ist, ein Getriebegehäusedeckel ist, sind an dem verbleibenden Gehäusegrundkörper, der eine im weitesten Sinne becherförmige Gestalt hat, Bearbeitungsvorgänge von unterschiedlichen Seiten erforderlich. Es muss zumindest die Auflagefläche für den Deckel plangefräst und wenigstens eine Bohrung für den Lagersitz der Ausgangswelle von der anderen Gehäuseseite nachgearbeitet werden.

Ausgehend hiervon ist es Aufgabe der Erfindung, ein Getriebegehäuse, insbesondere ein Getriebegehäuse für Getriebemotoren oder ein Teil davon, zu schaffen, das leicht von mehreren Seiten zu bearbeiten ist, wobei die Gefahr eines Verzugs beim Spannen des Gehäuses in der Werkzeugmaschine minimiert ist.

Diese Aufgabe wird erfindungsgemäß durch das Getriebegehäuse mit den Merkmalen des Anspruches 1 gelöst.

Erfindungsgemäß sind an dem ersten Gehäuseabschnitt, dessen Seitenwände einstückig miteinander verbunden sind und die einen Innenraum umgrenzen, wenigstens zwei Rippen vorgesehen, die von dem Gehäuseabschnitt nach außen stehen. Sie verlaufen vorzugsweise parallel zu einer Ebene. Hierdurch entsteht zunächst einmal eine Versteifung der betreffenden dünnen Gehäusewand, was für die Bearbeitung und die spätere Funktion vorteilhaft ist.

Außerdem stellen die Rippen Halteglieder dar, an denen das Gehäuse zur spangebenden Bearbeitung in der Maschine zu erfassen ist. Da diese Rippen nach außen von dem Gehäuse wegstehen, können sie mit großer Kraft zwischen Backen der Spanneinrichtung in der Werkzeugmaschine erfasst werden, ohne dass die dabei auftretenden Spannkräfte in das Gehäuse eingeleitet werden. Durch die Spannkräfte wird lediglich jede der massiven Rippen in sich zusammengedrückt, wodurch aber praktisch keine Kräfte hervorgerufen werden, die den Gehäuseabschnitt verformen könnten.

Die Spannung in der Werkzeugmaschine bzw. auf einem Werkstückträger wird vereinfacht, wenn die Rippe zwei zueinander zumindest angenähert parallele Rippenflächen aufweist. Da diese Rippen im Urformverfahren entstehen, ist eine exakte Parallelität unter Umständen nicht einzuhalten und auch nicht notwendigerweise erforderlich. Eine Gussrauigkeit beeinträchtigt ohnehin die Parallelität. Es genügt, wenn die Rippenflächen im Rahmen der ohnehin vorhandenen Rauigkeit oder der notwendigen Guss-Schrägen zueinander parallel sind.

Die Steifigkeit des Gehäuses sowohl hinsichtlich des Bearbeitungsvorgangs als auch hinsichtlich des Einspannvorgangs als auch schließlich hinsichtlich der Festigkeit gegenüber den bei der Benutzung des Getriebegehäuses auftretenden Kräften wird noch weiter erhöht, wenn die Rippe durch wenigstens einen zusätzlichen Steg gegen die betreffende Seitenwand des ersten Gehäuseabschnitts abgestützt ist.

Bei geschickter Positionierung dieser Rippen an dem ersten Gehäuseabschnitt sind ohne weiteres diejenigen Seiten des ersten Gehäuseabschnittes frei zugänglich, von denen her eine Bearbeitung erforderlich ist, d.h. es kann sowohl die Auflagefläche für den Deckel als auch ohne Probleme der Lagersitz mit einer Aufspannung bearbeitet werden. Die Fluchtungsgenauigkeit und Parallelität der Bohrungen und Sitze wird wesentlich erhöht, weil keine Umspannvorgänge notwendig sind, die dazu führen würden, dass der Referenzpunkt für die Bearbeitung des Gehäuses verlorengeht.

Wenn beispielsweise der Referenzpunkt für sämtliche spangebenden Bearbeitungsvorgänge eine spezielle Stelle an dem Maschinentisch oder einem sonstigen Werkstückträger ist, auf dem der Gehäuseabschnitt aufgespannt ist, bleibt auch bei Bearbeitungen von anderen Flächen dieser Bezugspunkt relativ zum Gehäuseabschnitt für alle Bearbeitungen unverändert.

Da insbesondere die Getriebegehäuse von Getriebemotoren von mehr als einer Seite mit sehr hoher Genauigkeit bearbeitet werden müssen, damit die Zahnräder des in dem Gehäuse enthaltenen Räderwerks ordnungsgemäß miteinander in Eingriff stehen, um einen vorzeitigen Verschleiss und Geräuschbildungen zu vermeiden, ist die neue Ausbildung des Getriebegehäuses sehr vorteilhaft.

Schließlich gestattet die neue Gestaltung des Getriebegehäuses eine Erhöhung der Fertigungsgenauigkeit auch bei Getriebegehäusen, die im Interesse der Stabilität aus möglichst wenigen Teilen bestehen bzw. möglichst kleine Öffnungen enthalten. Hierdurch werden obendrein die Herstellungskosten gesenkt.

Bei zueinander parallelen Rippenflächen bekommt die Rippe gegebenenfalls zumindest einen angenähert rechteckigen Querschnitt.

Die Einspannung und die Stabilität werden unter Umständen positiv beeinflusst, wenn die Rippe über ihre Länge zumindest angenähert dieselbe Höhe aufweist. Besonders günstige Einspannverhältnisse in der Werkzeugmaschine werden erreicht, wenn die Rippen in einer gemeinsamen Ebene liegen. Sie können sich bezüglich des zu bearbeitenden Gehäuseabschnitts diametral gegenüberliegen oder an angrenzenden Seitenwänden vorhanden sein.

Um ein ansprechendes Äußeres zu bekommen, hat der Steg an seinem rippenseitigen Ende vorzugsweise eine Höhe entsprechend der Höhe der Rippe. Er kann an seinem abliegenden Ende eine niedrigere Höhe aufweisen, so dass er in die betreffende Seitenwand übergeht.

Die Querschnittsgestalt des Stegs kann wahlweise rechteck-, dreieck- oder trapezförmig sein, je nachdem, welcher optische Eindruck erweckt werden soll bzw. welche Festigkeiten und Versteifungen der betreffenden Seitenwand des Gehäuseabschnitts durch den Steg erzielt werden sollen.

Im Übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 ein erstes Ausführungsbeispiel eines Getriebemotors mit einem erfindungsgemäßen Getriebegehäuse, bei dem an zwei diametral gegenüberliegenden Seiten Rippen vorgesehen sind, in einer perspektivischen Darstellung und
Fig. 2 einen Getriebemotor mit einem erfindungsgemäßen Getriebegehäuse, bei dem an zwei aneinander angrenzenden Seitenwänden jeweils eine Rippe vorhanden ist.

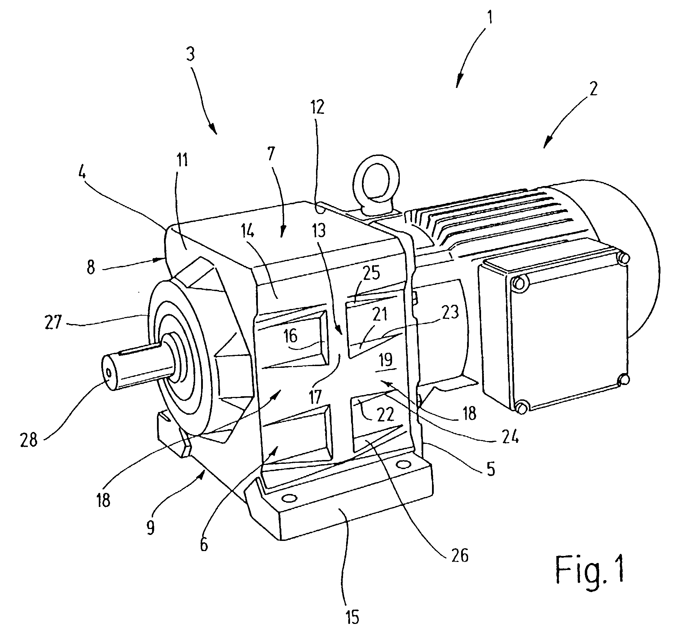

Fig. 1 zeigt einen Getriebemotor 1 mit einem elektrischen Antriebsmotor 2 und einem quader- oder blockförmigen Getriebeghäuse 3, in dem sich das Räderwerk des Getriebes befindet.

Das Getriebegehäuse 3 ist zweiteilig und setzt sich aus einem Gehäuseabschnitt 4 sowie einem daran befestigten Gehäusedeckel 5 als zweitem Gehäuseabschnitt zusammen, an dem der Motor 2 befestigt ist.

Der Gehäuseabschnitt 4 ist becherförmig und einstükkig. Er wird von vier paarweise zueinander parallelen Seitenwänden 6, 7, 8, 9 sowie einer Vorderwand 11 begrenzt. Ausgehend von der Vorderwand 11 haben die Seitenwände 6, 7, 8, 9 dieselbe Höhe und bilden an ihren von der Vorderwand 11 abliegenden Ende eine Auflagefläche 12 für den Gehäusedeckel 5. Die Auflagefläche 12 ist eine plane Ringfläche, wie dies bei Getriebegehäusen dieser Art üblich ist.

Auf der Seitenwand 6 verläuft parallel und im Abstand zu der Auflagefläche 12 eine längliche gerade Rippe 13, die an einem in Längsrichtung gelegenen Ende in einer auf der Seitenwand 6 ausgebildete Wulst 14 und an ihrem anderen Ende in einen Montageflansch 15 übergeht. Die Rippe 13 wird seitlich von zwei zueinander parallelen Rippenseitenwänden begrenzt, von denen wegen der perspektivischen Darstellung lediglich die Rippenseitenwand 16 zu erkennen ist. Zwischen den beiden Rippenseitenwänden 16 erstreckt sich eine ebene Rippenkopfwand 17. Da die beiden Rippenseitenwände 16 zueinander parallel sind, und zwar sowohl bezogen auf die Längsrichtung der Rippe 13 als auch bezogen auf deren Querrichtung erhält die Rippe 13 über ihre gesamte Länge eine rechteckige Querschnittsgestalt. Die Höhe der Rippe 13, gemessen über der Seitenwand 6, beträgt ca. 10 mm.

Um die Rippe 13 weiter zu verstärken, sind etwa auf der Mitte bezogen auf ihre Längserstreckung zwei Stege 18 vorgesehen, die zueinander spiegelbildlich sind und von einer Stegkopffläche 19 sowie zwei Stegseitenflächen 21 und 22 begrenzt sind. Die Stegkopffläche 19 geht ohne Sprung mit einem leichten Knick in die Rippenkopffläche 17 über. Ausgehend hiervon neigt sich die Rippenkopffläche 17 in Richtung auf die Seitenwand 6 und geht in diese im Bereich der Auflagefläche 12 stufenfrei über , ebenso wie auch der andere Steg 18 bei der Kante zwischen der Vorderwand 11 und der Seitenwand 6 in letztere glatt übergeht.

Die beiden Stegseitenwände 21 und 22 verlaufen unter einem Winkel zueinander, wodurch der Steg 18, im Querschnitt gesehen, eine trapezförmige Gestalt bekommt.

An einer geraden Kante 23 bzw. 24 gehen die Stegseitenwände 21 und 22 in die Seitenwand 6 über. Die beiden Kanten 23 und 24 verlaufen parallel zueinander.

Beide Stege 18 erstrecken sich rechtwinklig, bezogen auf die Längserstreckung der Rippe 13, und sie stehen auf dieser Längserstreckung senkrecht.

Sowohl im Bereich des Wulstes 14 als auch im Bereich des Befestigungsflansches 15 gehen von der Rippe 13 Flächen 25 und 26 aus, die ähnlich gestaltet sind, wie die gegenüberliegenden Stegseiten 21 und 22. Hierdurch entstehen neben jedem Steg 18 Nuten, durch die hindurch die Rippenseitenwände 16 zugänglich sind.

Die von dem Betrachter abliegende Seitenwand 8 ist in der gleichen Weise strukturiert wie die sichtbare Seitenwand 6, so dass sich bezüglich des Gehäuses 3 zwei Rippen 13 an dem Getriebegehäuse 3 gegenüber befinden und von dem Getriebegehäuse 3 nach außen wegstehen. Diese beiden Rippen 13 liegen in einer gemeinsamen, zu der Auflagefläche 12 parallelen Ebene.

Der Vollständigkeit halber sei noch erwähnt, dass sich aus der Vorderwand 11 ein zylindrischer Fortsatz 27 erhebt, in dem ein nicht erkennbarer Lagersitz für ein Lager einer Ausgangswelle 28 enthalten ist.

Die Herstellung des beschriebenen Getriebegehäuses 3 geschieht in der Weise, dass zunächst der Gehäusemittelabschnitt 4 durch Gießen oder Spritzen eines geeigneten Metalls in einer entsprechenden Form hergestellt wird. Die Formgravur ist so gestaltet, dass an dem Rohling für den Gehäuseabschnitt 4 die Rippen 13 sowie die Stege 19 allein aufgrund des Urformvorgangs entstehen. Da der so erhaltene Rohling keine hinreichend glatten Lagersitze, Lagerbohrungen und auch keine glatte Auflagefläche für den Gehäusedeckel 5 aufweist, muss der Rohling für den Gehäuseabschnitt 4 anschließend spangebend bearbeitet werden. Für diesen Bearbeitungsvorgang wird der Rohling des Gehäuseabschnitts 4 auf einem Maschinentisch oder einem sonstigen Werkzeugträger an den beiden Rippen 13 gespannt, und zwar derart, dass die Spannmittel an den einander gegenüberliegenden Rippenseitenflächen 16 jeder Rippe 13 angreifen. Die dabei auftretenden Spannkräfte verlaufen in jeder der Rippen 13 parallel zu der Seitenwand 6 bzw. parallel zu der Seitenwand 8, d.h. normal zu der betreffenden Rippenseitenwand 16. Folglich wird jede der Rippen 13 in sich durch die Spannmittel zusammengedrückt. Deshalb ruft die Aufspannung keine Spannkräfte hervor, die auf der Seitenwand 6 senkrecht stehen und den Gehäuseabschnitt 4 verdrücken würden.

Da der Gehäuseabschnitt 4 an den beiden Rippen 13 gehalten wird, ist sowohl die Auflagefläche 12 als auch die im zylindrischen Fortsatz 27 enthaltene Bohrung für das dort befindliche Lager frei zugänglich. Der Gehäuseabschnitt 4 kann ohne Umspannen sowohl von der Seite der Auflagefläche 12 als auch von der gegenüberliegenden Seite her bearbeitet werden.

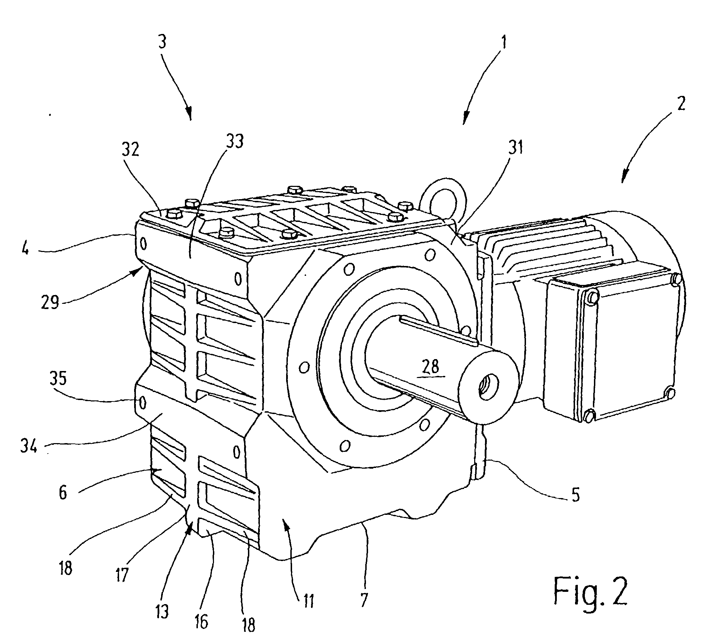

Wie Fig. 2 erkennen lässt, müssen die Rippen 13 sich bezüglich des Gehäuseabschnittes 4 keineswegs gegenüberliegen. Es können dieselben Vorteile bei der Fertigung auch erzielt werden, wenn die Rippen 13 einander gegenüberliegen.

Fig. 2 zeigt wiederum einen Getriebemotor 1, bei dem jedoch die Ausgangswelle 28 rechtwinklig zu der Längsachse des Antriebsmotors 2 verläuft. Das Getriebegehäuse 3 besteht aus einem Gehäuseabschnitt 4, der etwa käfigförmige Gestalt hat.

Der Gehäuseabschnitt 4 weist eine Vorderwand 11, eine nach links zeigende Seitenwand 6, eine nach unten weisende Seitenwand 7 sowie eine Rückwand 29 auf, die zu der Vorderwand 11 parallel verläuft. Ferner sind die Vorderwand 11 und die Rückwand 29 bei 31 über einen Steg miteinander verbunden, wodurch an dem Gehäuseabschnitt 4 zwei große Öffnungen entstehen, von denen die eine durch den Deckel 5 und die andere durch einen Deckel 32 verschlossen ist. Der Deckel 5 trägt, wie vorher, den daran befestigten Motor 2.

Wie vorher ist auf der Seitenwand 6 die bereits erläuterte Rippe 13 ausgebildet, die in Umfangsrichtung des Gehäuseabschnittes 4 verläuft. Die Rippe 13 ist eine gerade Rippe und hat im Wesentlichen dieselbe Gestalt, wie dies oben im Zusammenhang mit Fig. 1 erläutert wurde. Von der Rippe 13 gehen ebenfalls, wie beim vorherigen Ausführungsbeispiel, mehrere Stege 18, insgesamt zehn Stege, zu beiden Seiten der Rippe 13 ab. Die Stege 18 haben dieselbe Querschnittsgestalt und Ausrichtung bezüglich der Rippe 13 und der Seitenwand 6, wie die Rippe 13 des Ausführungsbeispiels nach Fig. 1.

Ergänzend sind an der Seitenwand 6 zusätzlich zwei Leisten 33 und 34 angeformt, die sich von der Vorderwand 11 bis zu der Rückwand 29 erstrecken. In ihnen sind Befestigungsbohrungen 35 enthalten.

Die in Fig. 2 nicht erkennbare Seitenwand 7 ist in der gleichen Weise strukturiert wie die Seitenwand 6, d.h. die Seitenwand 7 kann als eine Seitenwand 6 gedacht werden, die um den Umfang des Gehäuseabschnittes 4 verschoben ist.

Infolge dieser Konfiguration sind wiederum zwei Rippen 13 vorhanden, die sich auch in derselben Ebene befinden, jedoch im Bereich der in Fig. 2 links unten erkennbaren Ecke des Gehäuseabschnittes 4 zusammenstoßen. Die beiden Rippen 13 schließen somit einen Winkel von 90° miteinander ein und die Rippe 13 der Seitenwand 6 verläuft gegenüber der Auflagefläche 12 für den Gehäusedeckel 5, während die nicht erkennbare Rippe 13 der Seitenwand 7 gegenüber der Gehäuseöffnung für den Gehäusedeckel 32 angeordnet ist.

Der nach dem Urformen erhaltene Rohling für den Gehäuseabschnitt 2 wird zur weiterführenden spangebenden Bearbeitung über Eck an den beiden Rippen 13 gespannt, so dass gleichzeitig oder nacheinander, jedoch ohne Umspannen, die Auflageflächen für den Gehäusedeckel 5 und den Gehäusedeckel 32 bearbeitet werden können, ebenso wie die Lagersitze für die Ausgangswelle 28 oder andere innere Lagersitze.

Ein Getriebemotor ist an ein im Wesentlichen quaderförmiges Getriebegehäuse angeflanscht, das an wenigstens zwei Seitenwänden, die entweder einander gegenüberstehen oder aneinander angrenzen, mit Rippen versehen ist. Diese Rippen sind so an dem Gehäuse ausgerichtet, dass der Rohling des Gehäuses in einer Werkzeugmaschine aufgespannt werden kann und von wenigstens zwei Seiten ohne Umspannen bearbeitbar ist. Die Rippen verlaufen hierzu vorzugsweise in Umfangsrichtung des Gehäuses, d.h. in einer Richtung parallel zu der Richtung, in der eine der Seitenwände ihre größte Ausdehnung hat.

## Patentansprüche

1. Getriebegehäuse (3), insbesondere Getriebegehäuse (3) für Getriebemotoren (1), mit wenigstens einem ersten Gehäuseabschnitt (4), der wenigstens zwei einstückig miteinander verbundene Seitenwandabschnitte (6, 7, 8, 9, 11) aufweist, und mit wenigstens zwei an dem ersten Gehäuseabschnitt (4) vorgesehenen Rippen (13), die ausgehend von dem Getriebegehäuse (3) nach außen wegstehen und die mit dem ersten Gehäuseabschnitt (4) einstückig sind, **dadurch gekennzeichnet, daß** die Rippen (13) als Halteglieder ausgebildet sind, deren parallele Seitenwände (16) für eine Spanneinrichtung zugänglich sind, wobei von jeder Rippe (13) wenigstens ein Steg (18) ausgeht, der rechtwinkelig zu der Rippe (13) und rechtwinkelig zu der betreffenden Seitenwand (6,7,8) verläuft, an der die jeweilige Rippe (13) vorhanden ist, und der mit der betreffenden Rippe (13) sowie der betreffenden Seitenwand (6,7,8) einstückig ist.

2. Getriebegehäuse nach Anspruch 1, **dadurch gekennzeichnet, dass** die Rippen (13) parallel zu einer Ebene verlaufen.

3. Getriebegehäuse nach Anspruch 1, **dadurch gekennzeichnet, dass** zumindest eine Rippe (13) einen zumindest angenähert rechteckigen Querschnitt aufweist.

4. Getriebegehäuse nach Anspruch 1, **dadurch gekennzeichnet, dass** wenigstens eine der Rippen (13) über ihre Länge zumindest angenähert dieselbe Höhe aufweist.

5. Getriebegehäuse nach Anspruch 1, **dadurch gekennzeichnet, das**s die Rippen (13) länglich sind.

6. Getriebegehäuse nach Anspruch 1, **dadurch gekennzeichnet, dass** die Rippen (13) in einer gemeinsamen Ebene liegen.

7. Getriebegehäuse nach Anspruch 1, **dadurch gekennzeichnet, dass** die Rippen (13) bezüglich des Getriebegehäuses (3) einander diametral gegenüberliegen.

8. Getriebegehäuse nach Anspruch 1, **dadurch gekennzeichnet, dass** die Rippen (13) an Seitenwänden (6,7) ausgebildet sind, die aneinander angrenzen.

9. Getriebegehäuse nach Anspruch 1, **dadurch gekennzeichnet, dass** der Steg (18) an seinem rippenseitigen Ende eine Höhe entsprechend der Höhe der zugehörigen Rippe (13) aufweist.

10. Getriebegehäuse nach Anspruch 1, **dadurch gekennzeichnet, dass** der Steg (18) an seinem von der Rippe (13) abliegenden Ende niedriger ist als an seinem rippenseitigen Ende.

11. Getriebegehäuse nach Anspruch 1, **dadurch gekennzeichnet, dass** der Steg (18) im zu der Längserstreckung der Rippe (13) parallelen Querschnitt zumindest angenähert dreieck- oder trapezförmig ist.

12. Getriebegehäuse nach Anspruch 1, **dadurch gekennzeichnet, dass** der erste Gehäuseabschnitt (4) zumindest angenähert becherförmig ist und die Seitenwände (6,7,8,9) des ersten Gehäuseabschnitts (4) an einem Ende eine Auflagefläche (12) für den zweiten Gehäuseabschnitt (5,32) bilden.

13. Getriebegehäuse nach Anspruch 1, **dadurch gekennzeichnet, dass** wenigstens zwei Rippen (13) parallel zu der Auflagefläche (12) verlaufen.

14. Getriebegehäuse nach Anspruch 1, **dadurch gekennzeichnet, dass** der erste Gehäuseabschnitt (4) zumindest angenähert rohrförmig ist.

15. Getriebegehäuse nach Anspruch 1, **dadurch gekennzeichnet, dass** der erste Gehäuseabschnitt (4) zwei Auflageflächen (12) aufweist, von denen die eine für den zweiten Gehäuseabschnitt (5) und die andere für einen dritten Gehäuseabschnitt (32) vorgesehen ist, die beide an dem ersten Gehäuseabschnitt (4) zu befestigen sind.

16. Getriebegehäuse nach Anspruch 1, **dadurch gekennzeichnet, dass** der erste Gehäuseabschnitt (4) in wenigstens einer seiner Seitenwände (11) einen Lagersitz enthält.

17. Getriebegehäuse nach Anspruch 1, **dadurch gekennzeichnet, dass** wenigstens ein zweiter Gehäuseabschnitt (5) vorhanden ist, der mit dem ersten Gehäuseabschnitt (4) verbindbar ist.

## Claims

1. Gear box (3), in particular gear box (3) for gear motors (1), with at least a first box part (4) which comprises at least two joiningly fixed side wall parts (6,7,8,9,11) and where at least two ribs are shown on the first box part (4), which come from the gear box (3) and protrude outwardly and are joiningly fixed with the first box part (4), ***characterized in* that** the ribs (13) are formed like holding elements, the parallel side walls (16) of which have access to a fastening device, where at least one supporting surface (18) has its point of origin, which runs parallelly with the rib (13) and parallelly with the side walls (6,7,8) concerned where the at any time existing rib (13) is and which is joiningly fixed with the rib (13) concerned as well as with the side wall (6,7,8) concerned.

2. Gear box according to claim 1, ***characterized in* that** the ribs (13) run parallelly with a plain surface.

3. Gear box according to claim 1, ***characterized in* that** at least one rib (13) has at least an approxmiate rectangular profile.

4. Gear box according to claim 1, ***characterized in* that** at least one of the ribs (13) over its length has at least approximately the same height.

5. Gear box according to claim 1, ***characterized in* that** the ribs (13) are oblong shaped.

6. Gear box according to claim 1, ***characterized in* that** the ribs (13) lie in a common plain surface.

7. Gear box according to claim 1, ***characterized in* that** the ribs (13) in regard to the gear box (3) lie diametrally opposite each other.

8. Gear box according to claim 1, ***characterized in* that** the ribs (13) are built up on adjacent side walls (6,7).

9. Gear box according to claim 1, ***characterized in* that** the supporting surface (18) at its ribbed end has a height that corresponds to the height of the related rib (13).

10. Gear box according to claim 1, ***characterized in* that** the supporting surface (18) is lower at the end that turns away from the rib (13) than at the end that turns towards the rib.

11. Gear box according to claim 1 ***characterized in* that** the supporting surface (18) in the cross section parallel to the longitudinal extension of the rib (13) is at least triangular or trapezoidal.

12. Gear box according to claim 1, ***characterized in* that** the first gear box part (4) is at least approximately cup-shaped and that the side walls (6,7,8,9) of the first box part (4) at one end make a contact face (12) for the second box part (5,32).

13. Gear box according to claim 1, ***characterized in* that** at least two ribs (13) run parallelly with the contact face (12).

14. Gear box according to claim 1, ***characterized in* that** the first box part (4) is at least approximately tubular.

15. Gear box according to claim 1, ***characterized in* that** the first box part (4) has two contact surfaces, where one of them is determined for the second box part (5) and the other for a third box part (32), which both are to be fastened on the first box part (4).

16. Gear box according to claim 1, ***characterized in* that** the first box part (4) in at least one of its side walls (11) contains a bearing seat.

17. Gear box according to claim 1, ***characterized in* that** at least a second box part (5) is available which can be connected with the first box part (4).

## Revendications

1. Carter (3) de boîte de vitesses, notamment carter (3) de boîte de vitesses pour des moto-réducteurs (1), comportant une première partie (4) de carter, qui comporte au moins deux éléments de paroi latérale (6, 7, 8, 9, 11), qui sont reliés entre eux d'un seul tenant, et au moins deux nervures (13), qui sont prévus sur la première partie (4) du carter, font saillie vers l'extérieur à partir du carter (3) de la boîte de vitesses et sont réunies d'un seul tenant avec la première partie (4) du carter, **caractérisé en ce que** les nervures (13) sont agencées sous la forme d'organes de retenue, dont les parois latérales parallèles (16) sont accessibles pour un dispositif de serrage-, au moins une barrette (18) qui s'étend à partir de chaque nervure (13), et ce perpendiculairement à la nervure (13) et perpendiculairement à la paroi latérale considérée (6, 7, 8), sur laquelle est présente la nervure respective (13), et qui est réalisée d'un seul tenant avec la nervure considérée (13) ainsi qu'avec la paroi latérale considérée (6, 7, 8).

2. Carter de boîte de vitesses selon la revendication 1, **caractérisé en ce que** les nervures (13) sont parallèles à un plan.

3. Carter de boîte de vitesses selon la revendication 1, **caractérisé en ce qu'**au moins une nervure (13) possède une section transversale au moins approximativement rectangulaire.

4. Carter de boîte de vitesses selon la revendication 1, **caractérisé en ce qu'**au moins l'une des nervures (13) possède sur sa longueur une hauteur au moins approximativement identique.

5. Carter de boîte de vitesses selon la revendication 1, **caractérisé en ce que** les nervures (13) sont allongées.

6. Carter de boîte de vitesses selon la revendication 1, **caractérisé en ce que** les nervures (13) sont situées dans un plan commun.

7. Carter de boîte de vitesses selon la revendication 1, **caractérisé en ce que** les nervures (13) sont diamétralement opposées par rapport au carter (3) de la boîte de vitesses.

8. Carter de boîte de vitesses selon la revendication 1, **caractérisé en ce que** les nervures (13) sont formées sur des parois latérales (6, 7), qui se jouxtent.

9. Carter de boîte de vitesses selon la revendication 1, **caractérisé en ce que** la barrette (18) possède, au niveau de son extrémité côté nervure, une hauteur qui correspond à la hauteur de la nervure associée (13).

10. Carter de boîte de vitesses selon la revendication 1, **caractérisé en ce que** la barrette (18) est plus basse au niveau de son extrémité éloignée de la nervure (13) qu'au niveau de son extrémité proche de la nervure.

11. Carter de boîte de vitesses selon la revendication 1, **caractérisé en ce que** la barrette (18) possède une forme au moins approximativement triangulaire ou trapézoïdale selon une coupe transversale parallèle à l'étendue longitudinale de la nervure (13).

12. Carter de boîte de vitesses selon la revendication 1, **caractérisé en ce que** la première partie (4) du carter est au moins approximativement en forme de pot et que les parois latérales (6, 7, 8, 9) de la première partie (4) du carter forment, au niveau d'une extrémité, une surface d'appui (12) pour la seconde partie (5, 32) du carter.

13. Carter de boîte de vitesses selon la revendication 1, **caractérisé en ce qu'**au moins deux nervures (13) s'étendent parallèlement à la surface d'appui (12).

14. Carter de boîte de vitesses selon la revendication 1, **caractérisé en ce que** la première partie (4) du carter possède une forme au moins approximativement tubulaire.

15. Carter de boîte de vitesses selon la revendication 1, **caractérisé en ce que** la première partie (4) du carter comporte deux surfaces d'appui (12), dont l'une est prévue pour la seconde partie (5) du carter et dont l'autre est prévue pour une troisième partie (32) du carter, ces deux parties du carter devant être fixées à la première partie (4) du carter.

16. Carter de boîte de vitesses selon la revendication 1, **caractérisé en ce que** la première partie (4) du carter contient un siège de palier dans au moins l'une de ses parois latérales (11).

17. Carter de boîte de vitesses selon la revendication 1, **caractérisé en ce qu'**il est prévu au moins une seconde partie (5) du carter, qui peut être reliée à la première partie (4) du carter.
